# EUROPEAN PATENT SPECIFICATION

(11) **EP 1 074 757 B1**
(45) Date of publication and mention of the grant of the patent: **10.09.2008**
(21) Application number: 99830499.2
(22) Date of filing: 02.08.1999
(51) Int. Cl.: F16D 65/12, F16D 55/32

(54) **Disc brake device particularly suitable for motor vehicles**
Scheibenbremsvorrichtung, insbesondere geeignet für Kraftfahrzeuge
Dispositif de frein à disque, utile notamment pour véhicules à moteur

(43) Date of publication of application: 07.02.2001
(73) Proprietor: Brembo S.p.A., 24035 Curno (Bergamo) (IT)
(72) Inventor: Lavezzi, Roberto, 24030 Brembate di sopra (Bergamo) (IT); Carminati, Fabiano, 24030 Mozzo (Bergamo) (IT)
(74) Representative: Lecce, Giovanni

(56) References cited:
- FR-A- 2 056 625
- GB-A- 1 202 904
- GB-A- 2 093 949
- US-A- 3 692 148
- US-A- 4 662 482
- US-A- 5 437 351

## Description

The present invention relates to a disc brake device particularly suitable for motor-vehicles.

More particularly, the present invention relates to a disc brake device particularly suitable for motor-vehicles, comprising a fixed caliper coupled to a sliding disc.

As is known, braking devices are units capable of slowing or stopping a vehicle or, generally, a moving mass, transforming the kinetic energy of the vehicle into thermal energy.

A type of braking device used both in motor-cars or motor-vehicles is the one constituted by a disc brake from metal astride of which calipers operate that are fixed to an articulated spindle or the hub-holder, and provided with braking gaskets, generally referred to as "pads".

The disc brake comprises a braking band provided with a swept braking surface, and a bell or hub connected to the wheel axle.

The suitably activated calipers press the pads against the braking band, and the braking action is produced by the friction between the pads and the braking band of the disc brake.

As is known, the conventional braking devices may be of either the type comprising a fixed disc brake realized integrally with the bell or hub and a fixed caliper body provided with opposite pistons that act on the brake pads pushing them against the braking swept surface, or the type comprising a fixed caliper and a floating disc or a floating caliper and a disc.

In the first type of devices, the coupling of the discs to the brake pads is geometrically stiff and does not allow to realize a sufficient adjustment and self-alignment; in the second type of devices, instead, the axial self-alignment between the disc brake and the brake pads is allowed by either the floating disc or the floating caliper.

The braking device with a fixed caliper and a floating disc, the braking band, i.e. the disc on whose opposed parallel faces the disc pads exercise their friction action, is not integral with the wheel hub, but engages with the same in coaxial alignment by means of a movable coupling which allows radial expansions, due to heating produced by the friction-generated heat, and limited axial shifting. Said coupling is obtained by alignment, however, disappears when returning to the resting position at the end of the braking action.

This effect, together with the unavoidable axial oscillation of the braking band, while being realized with strict working and assembly tolerances, can cause discontinuous creeping contacts between the disc brake and the pads even when the brake is not activated, with ensuing irregular wear and the possibility of onset, in time, of vibration phenomena, known by the name of judders, during the braking. In their turn, such phenomena cause an accentuation of the irregularity of the wear conditions and, lastly, a premature necessity of replacing the disc brake.

In the braking devices with a floating calliper and a fixed disc, the correct axial self-centering between the pads and the disc brake is allowed by the possibility of axial sliding of the calliper, assembled by means of calibrated guides on suitable seats of the calliper support.

These braking devices show functionality problems associated to possible sliding difficulties of the calliper along their own support; this drawback is known as "drawer effect".

Brake devices are disclosed in GB 2093 949, US 4 662 482, US 5 437 351, FR 2 066 625, GB 1 202 904 and US 3 692 148.

Object of the present invention is to obviate the drawbacks of the known disc brake devices.

More particularly, object of this invention is to provide a disc brake device, particularly suitable for motor-vehicles, such as to be exempt from vibration phenomena and such as not to show the "drawer effect".

A further object of the present invention is to provide a disc brake device that is reliable, easily and economically realizable and has reduced dimensions, so as to be applicable also in those cases when the overall size on the wheel side is critical, as for instance in motor-cross or endurance motorcycles with spoke wheels.

From its more general aspect, the present invention allows to achieve these and still other objects, as will be clear thanks to the following description, by means of a braking device comprising an axially sliding disc brake; a fixed brake caliper, provided on one side only with a means for activating a first brake pad against the braking surface of the disc brake, and a second fixed calliper opposite to the first one.

The objects of the present invention are accomplished through a disc brake device as claimed in claim 1 and through a strip-like elastic means for use in the mobile coupling of a disc brake as claimed in claim 12.

Additional advantageous features are recited in the dependent claims.

During the running, when the braking device is not operating, the disc brake positions by perfectly centering between the brake pads, as it can slide axially along the wheel hub. When the braking device is operating, the mobile pad is pushed by a cylinder-piston system of the fixed calliper against the brake pads of the disc brake. As a consequence, the brake disc is pushed against the second fixed brake pad and, once it has reached the contact, the braking action is exercised which results to be exercised in substantially the same manner by the two opposite brake pads.

The possibility of axial sliding of the disc brake allows the automatic recovery of the wear of the fixed pad.

The working concept of the braking device of the present invention is therefore different from both that with a fixed calliper, as the force exercised on the pads is not exercised by opposite pistons, and from that with the floating calliper, as the reaction on the side of the disc brake opposite to the pistons is obtained through a movement of the calliper body which remains fixed.

The disc brake is coaxial to the wheel hub and connected to the latter by means of a mobile coupling obtained by the engagement of bosses into radial slots of the disc brake, with the interposition of a strip-like elastic mean.

The working concept of the braking device of the present invention is therefore different from both that with a fixed caliper, as the force exercised on the pads is not exercised by opposite pistons, and from that with the floating caliper, as the reaction on the side of the disc brake opposite to the pistons is obtained through a movement of the caliper body which remains fixed.

The disc brake is coaxial to the wheel hub and connected to the latter by means of a mobile coupling obtained by the engagement of bosses into radial slots of the disc brake, with the interposition of a strip-like elastic means.

The strip-like means, which is also an object of the present invention comprises:
- a first strip-like elastic portion, having a flat end which interposes between the flat surface of the wheel hub boss and the entraining surface of the radial slot of the disc brake, an opposite arched profile end which adheringly engages with the side surface of the disc slot opposite to the entraining one, and an intermediate curved part; and
- a second flange-shaped fixing portion integral with the first one, located laterally and along a plane orthogonal with respect to said flat end, and provided with a fastening means and at least a protrusion for stopping the axial travel of the disc brake.

The first elastic portion may be substantially U- or C-shaped.

The second fixing portion is connected to and integral with the flat end of the first elastic portion and extends either towards the end of the arched profile end or the intermediate curved part.

The elasticity of the elastic means allows the recovery of the circumferencial clearance between the radial slots and the wheel bosses, and determines the stable contact in correspondence of the entraining surface during the braking of the braking band. The force, circumferentially directed and exercised by the elastic means on the radial slot, determines by friction the permanence of the braking band in the position taken on during the braking active step also during the release step.

The mobile coupling between the disc and the wheel hub allows a correct radial thermal expansion of the disc brake, caused by the heat produced by the wear dissipation between pads and braking bands of the vehicle kinetic energy, and ensures also the correct and lasting centering of the disc brake between the pads, which act astride of the same. There is also ensured the possibility of varying the centering position in a sufficiently large interval, so as to allow in the time the possibility of adjustment as the wear condition of the pads proceeds.

The correct axial centering of the braking band between the pads ensure that the clearance which is dynamically caused upon the release prevents any creeping contact between the brake pads and avoids therefore the onset of vibration phenomena. Besides, the presence of the elastic means determines the correct angle position of the disc brake, always in touch with the entraining surface of the radial slot. Its placement between the steel disc brake and the aluminum wheel bosses excludes the direct contact between these two elements and prevents therefore the onset of premature wear phenomena of said wheel bosses.

The braking device of the present invention allows to obtain at the same time the advantages that are usually obtainable with the fixed caliper respectively the floating caliper. In fact, with respect to a fixed caliper braking device of the known art, the device of the present invention allows - the other characteristics being equal - higher running disc temperatures and reduced dimensions that render it particularly suitable for applications that are critical from the viewpoint of overall dimensions, such as those present in the case of motor-cross or endurance motorcycles with spoke wheels.

With respect to a floating caliper braking device, wherein the correct axial centering of the disc brake between the active surfaces of the brake pads is obtained thanks to the possibility of axial sliding of the caliper, the braking device of the present invention allows to eliminate the possible functionality problems associated to the sliding coupling between the caliper body and the support (drawer effect).

The constructive and functional characteristics of the braking device of the present invention will be better understood thanks to the following description, wherein reference is made to the attached drawings which represent a preferred embodiment reported by way of non limiting example and wherein:
Figure 1 shows the schematic view of a section of the braking device of the present invention, in condition of substantially non-wear of the brake pads;
Figure 2 shows the schematic view of the same section of Figure 1 with the braking device in condition of the maximum allowed wear;
Figure 3 shows the schematic view of the cross-section of the wheel boss, the disc brake, the elastic means interposed and a connection means in the exploded connection position;
Figure 4 shows the schematic view of the cross-section of the wheel boss, the disc brake, the elastic means interposed and a connection means of Figure 3, assembled;
Figures 5A and 5B show the schematic cross-section respectively front views of a radial slot of the disc brake;
Figures 6A and 6B show the schematic side respectively front views of a wheel boss;
Figure 7 shows the perspective top view of an elastic means;
Figure 8 shows the perspective side view of the elastic means of Figure 7;
Figure 9 shows the perspective side view of another elastic means;
Figure 10 shows a perspective side viw of the elastic means of Figure 9 taken in correspondence of the orthogonal side of the first one;
Figure 11 shows the schematic front view of the connection area between disc brake, elastic means and wheel boss, according to a first embodiment;
Figure 12 shows the schematic front view of an enlarged detail of Figure 11;
Figure 13 shows the schematic front view of the connection area between disc brake, elastic means and wheel boss, according to a second embodiment;
Figure 14 shows the schematic front view of an enlarged detail of Figure 13, and
Figure 15 shows the schematic front view of the connection area between disc brake, elastic means and wheel boss shown in Figures 13 and 14 in the position taken during the backing braking.

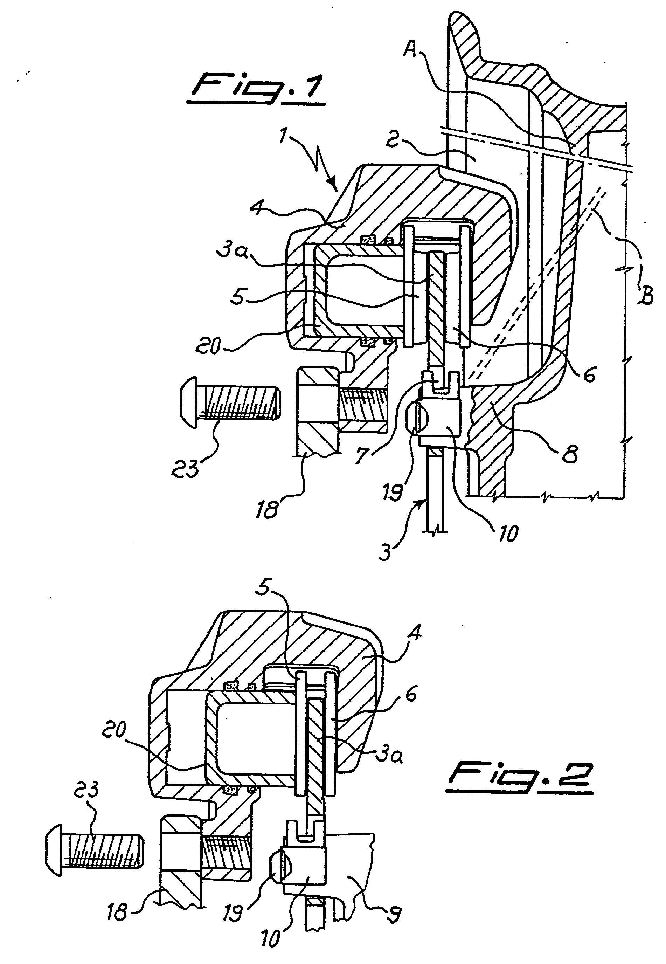

With special reference to the figures, Figures 1-6 show a wheel for motor-vehicle of the arm type (A) or the spoke type (B), provided with the braking device (1) of the present invention, housed in the camber angle (2) of the wheel.

The braking device comprises a disc brake (3), preferably from steel, and a caliper body (4), located astride of the disc brake (3) and comprising two brake pads (5, 6), located on the opposite sides of said disc brake (3), one of which is fixed and the other one movable.

The disc brake (3) is provided with a braking band (3a) with opposite braking surfaces and, along its internal annular surface, equidistant radial slots (7) for fixing to a wheel hub (8). The number of radial slots is not critical and may preferably range from 2 to 12.

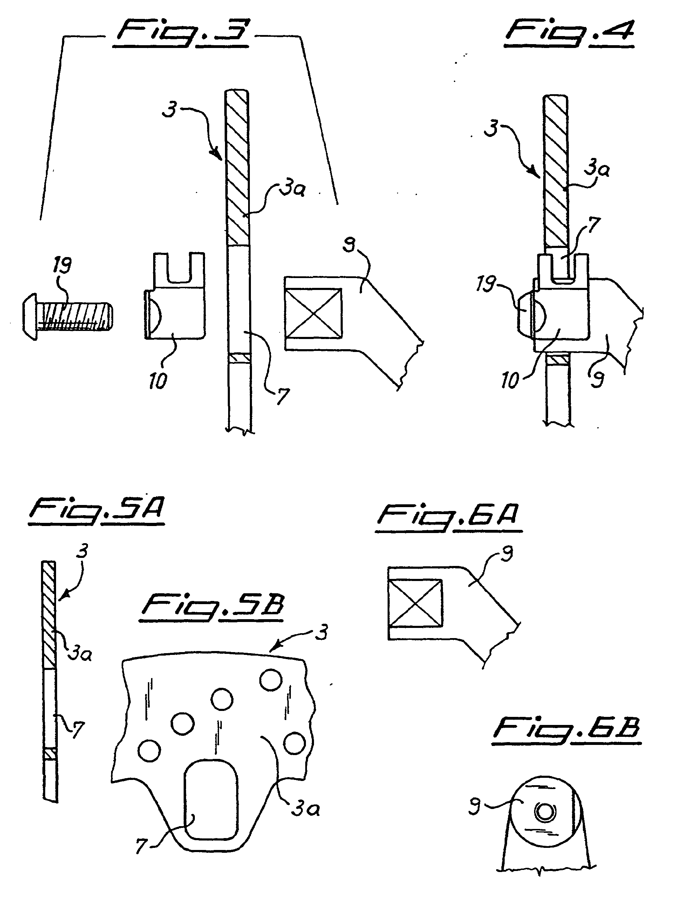

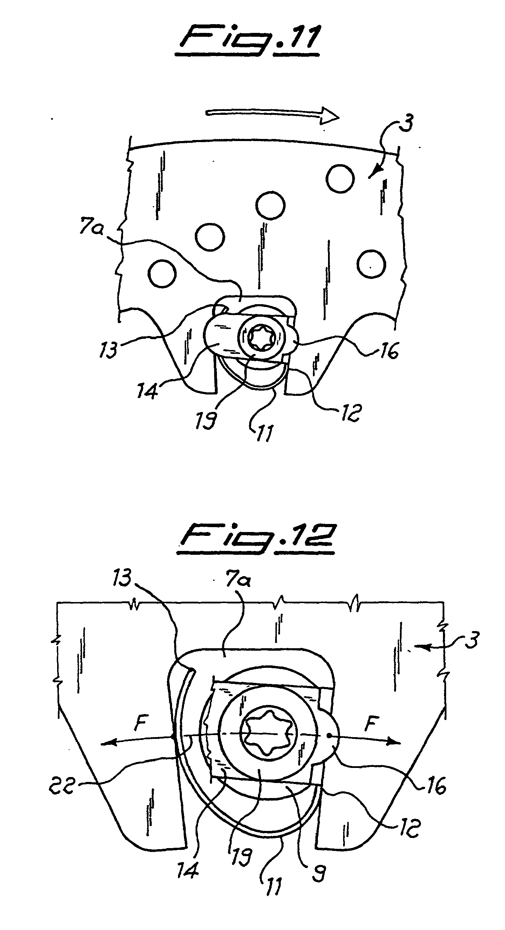

The radial slots may be of either the closed type (7) as shown in Figures 3, 5a, 5b, 13, 14 and 15, or the type (7a) open on the side facing the axle of the disc brake (3) as shown in Figures 11 and 12.

The wheel hub (8) is provided with bosses (9) obtained from the same material as the wheel hub, preferably from aluminum alloys, in the same number as those of slots (7, 7a), but of a smaller size to be inserted in the latter.

The disc brake (3) is slidingly connected to the wheel hub (8) through the insertion of bosses (9) in the corresponding radial slots (7, 7a), with interposition of an elastic strip-like mans (10) having a suitably shaped profile as specified below.

The caliper body (4) is located astride of the disc brake (3) and is fixed to a fork (18) of the motor-vehicle by means of a connection, such as for instance screws (23). The caliper body (4) comprises in its inside, on its internal side located in camber angle (2) of wheel (A, B), the fixed brake pad (6) and, on its opposite external side, a cylinder-piston system whose mobile brake pad (5) is located near the free end of piston (20). Both the fixed (6) and mobile brake pads are located in correspondence respectively of the two opposite braking surfaces of the braking band (3a).

The activation of piston (20) pushes the mobile pad (5) against one of the braking surfaces of the braking band (3a) and the latter against the surface of the fixed pad surface (6), ensuring, during the braking, the correct and lasting axial centering of the braking disk (3a) of the brake disc (3) between the opposite pads (5, 6).

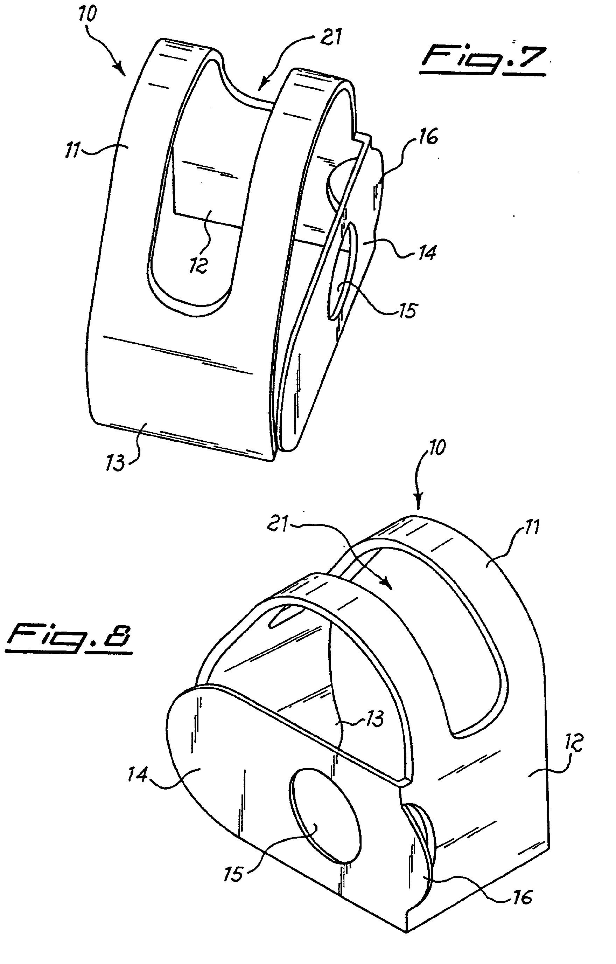

Figures 7 and 8, respectively 9 and 10, show two possible embodiments of the strip-like elastic means (10, 10'), which are also an object of the present invention.

With reference to Figures 7 and 8, the strip-like elastic means (10) comprises:
- a first strip-like elastic portion, substantially U-shaped, formed by a flat arm (12), an opposite arched profile arm (13) and an intermediate curved part (11), and
- a second fixing portion (14), flange-shaped, located laterally and along a plane orthogonal with respect to that of the flat arm (12), with which it forms an integral part.

The intermediate curved part (11) may be provided with a longitudinal slot (21).

The second fixing portion (14) extends towards the arched profile arm (13) provided with a fastening means, such as a hole (15) and a lateral portion (16) protruding with respect to the flat end (12).

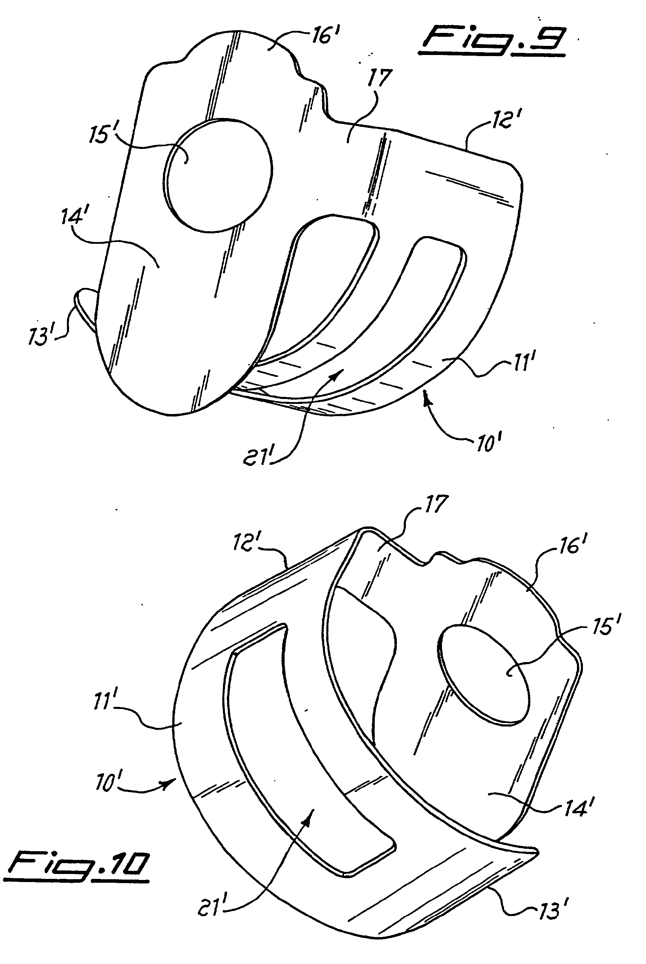

The second embodiment of the string-like elastic means (10') shown in Figures 9 and 10, comprises:
- a first strip-like elastic portion, substantially C-shaped, formed by a flat end (12'), an opposite arched end (13') and an intermediate curved part (11'), and
- a second flange-shaped fixing portion (14'), located laterally and along a plane orthogonal with respect to that of the flat arm (12'), with which it forms an integral part.

The intermediate curved part (11') may be provided with a longitudinal slot (21').

The second fixing portion (14') extends towards the intermediate curved part (11') and is provided with a fixing means, such as a hole (15') and a lateral portion (16') protruding with respect to the flat end (12'), and is connected to said flat end (12') by means of a connecting length (17).

The elastic means (10, 10') is inserted between boss (9) and its corresponding slot (7, 7a) in such a manner that its arms or lateral ends (12, 12', 13, 13') are in pressure-contact with the opposite lateral surfaces of each radial slot (7, 7').

Preferably, the flat arm or end (12, 12') is located in touch with the entraining surface (7') of the radial slots (7, 7a) during the active braking step, so as to ensure the correct positioning of the spring.

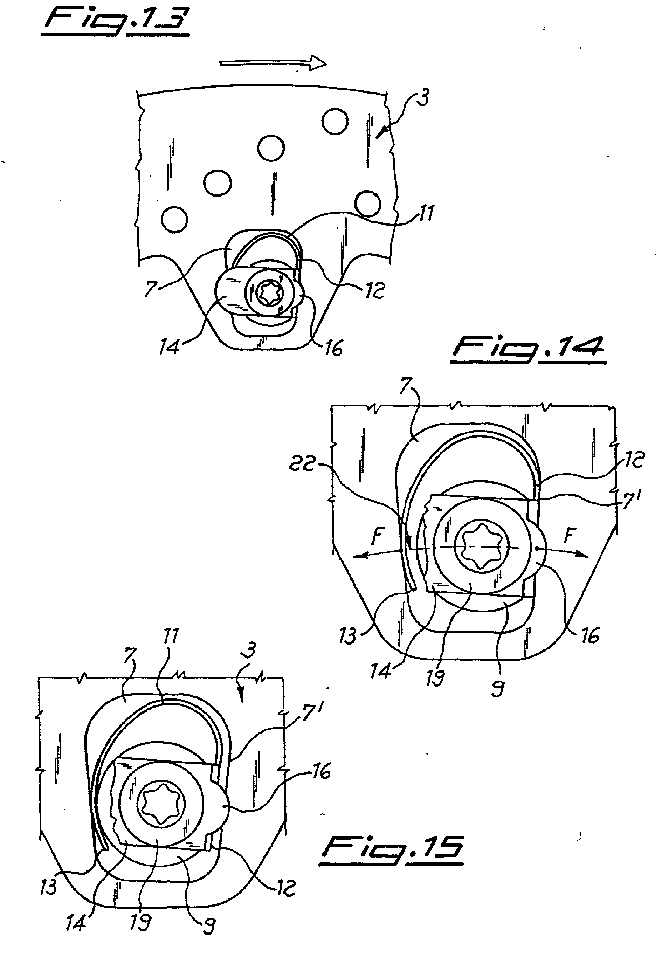

The strip-like elastic means (10, 10') may be placed between boss (9) and the corresponding slot (7, 7a) with the intermediate curved part (11, 11') facing the outside of the disc brake (3), i.e. the braking band (3a), as shown by Figures 13, 14 and 15, or the inside, i.e. the axle, of said disc brake as shown in Figures 11 and 12; the latter position is preferred when the radial slots (7a) are of the open type.

The strip-like elastic means (10, 10') is fixed to the corresponding boss (9) by means of screws (19) or other suitable fasteners inserted in hole (15, 15'). The protruding lateral portion (16, 16') of the second fixing portion (14, 14') has the function of stopping the axial sliding of disc (3), preventing thereby the same from being accidentally separated from the wheel hub when, on disassembling the wheel, such function is not carried out by the presence of the caliper and the related pads.

The coupling between the slots (7, 7a) of the disc brake (3) and bosses (9) with the interposed elastic means (10, 10') is obtained though a circumferential clearance (22), in order to allow the assembly of the brake disc, even with reasonable working tolerances of the coupled components. However, the presence of the elastic means (10, 10') allows, thanks to the F forces exercised on the bearing surfaces between the arms or ends (12, 12', 13, 13') of each elastic means and the slots (7), the positioning of the disc brake circumferentially with respect to bosses (9), so that a stable contact is obtained. At the start of the braking action, no circumferential shifting of the disc brake takes place, which would be necessary to recover the presence of a clearance in correspondence of the entraining surface (7) during the braking, should its position be left uncertain because of the non-interposition of the elastic element.

Figure 15 shows the position taken on by the strip-like elastic means (10, 10') during the backing braking. In this condition, the arched profile arm or end (13, 13') is interposed and pressed between boss (9) of the wheel hub (8) and the surface (7") of the radial slot (7) of the brake disc (3) opposed to the entraining one (7). The particular configuration of said arched profile end (13, 13') is such that it does not undergo any permanent deformation that might jeopardize its working.

The forces F exercised by the elastic means endure also the keeping of the axial position of the disc brake taken on during the braking active step, also upon the release. In fact, such forces, on the occasion of actions tending to axially shift the disc brake, cause the onset of friction forces, tangential with respect to the coupled surfaces, which oppose said shifting, within the limits of the dry friction Coulomb law. This prevents, during the non-activity steps of the disc brake, the formation of undesired contacts between the braking band and the pads due to accidental shiftings, but does not prevent the forces exercised by the pads from determining, on the braking, the reaching of the correct axial position of the disc brake.

The width of the allowed axial shifting allows the working position to adjust each time to the changed wear conditions of the brake pads that cause, as a consequence of the unilateral activation of said pads, i.e. in the presence of a mobile pad and a fixed pad, the necessity of modifying in the time the axial position of the disc brake or, in other words, to recover the wear.

While this invention has been described with reference to a preferred embodiment. various changes and variants may be introduced in the braking device of the present invention, in the light of the above teaching. It is therefore obvious that the present invention comprises all the changes and variants that fall within the protection scope of the following claims.

## Claims

1. A disc brake device, particularly suitable for motor-vehicles, comprising
- a wheel hub (8);
- a disc brake (3) provided with a braking band (3a) with opposite braking surfaces, co-axially connected to said wheel hub (8) by means of a movable coupling and axially sliding along said wheel hub (8),
and
- two brake pads (5, 6) opposite and located in correspondence of said braking surfaces, and activated by a calliper (4) against said surfaces, one (6) of said brake pads being fixed and the other brake pad (5) being mobile and activated by said fixed calliper (4),
wherein the disc brake (3) is provided with equidistant radial slots (7, 7a) each having an entraining surface (7') and a side surface opposite to said entraining surface (7'), and the wheel hub (8) is provided with corresponding radial bosses (9) whose size is smaller than that of said slots (7, 7a), each boss being provided with a flat surface, and the movable coupling of the disc brake (3) to the wheel hub (8) is obtained through the insertion of said bosses (9) in the corresponding radial slots (7, 7a) with the interposition of a strip-like elastic means (10, 10'), **characterised in that** the strip-like elastic means comprises:
- a strip-like elastic portion formed by a flat arm (12, 12'), interposing between the flat surface of the wheel hub boss (9) and the entraining surface (7') of the radial slots (7, 7a), an opposite arched profile arm (13, 13') engaging with the side surface of the disc slot (7, 7a) opposite to the entraining surface (7'), and an intermediate curved part (11, 11'), and
- a fixing portion (14, 14') flange-shaped, located laterally and along a plane orthogonal with respect to that of the flat arm (12, 12'), with which it forms an integral part; said second fixing portion being provided with a fastening means (15, 15') apt to receive screws (19) or other fasteners, and with at least one lateral portion protruding with respect to the flat arm or end (12, 12').

2. The disc brake device according to claim 1, wherein said strip-like elastic portion is substantially U-shaped and formed by a flat arm (12), an opposite arched profile arm (13) and an intermediate curved part (11), and said flange-shaped fixing portion (14) is connected to and forums an integral part with said flat arm (12) and protrudes towards the arm (13) having an arched profile.

3. The disc brake device according to claim 1, wherein said strip-like elastic portion (10') is substantially C-shaped and formed by a flat end (12'), an opposite arched end (13') and an intermediate curved part (11'), and the flange-shaped fixing portion (14') protrudes towards the curved intermediate part (11') and is connected to said flat end (12') through a connecting length (17).

4. The disc brake device according to anyone of the preceding claims, wherein the intermediate curved part (11, 11') of said elastic portion (10') is provided with a longitudinal slot (21, 21').

5. The disc brake device according to anyone of the preceding claims, wherein the elastic means (10, 10') is inserted between the boss (9) and the corresponding slot (7, 7a) in such a way that their arms (12, 12', 13, 13') are in pressure-contact with the opposite lateral surfaces of each radial slot (7, 7a) and are fastened to the corresponding boss (9) through a screw (19) or other fasteners.

6. The disc brake device according to anyone of the preceding claims, wherein said flat arm (12, 12') of said elastic means (10) is in touch with the entraining surface (7') of each radial slots (7, 7a) during the active braking step.

7. The disc brake device according to anyone of the preceding claims, wherein the intermediate curved part (11, 11') of said elastic portion of the elastic means (10, 10') faces the outside of the disc brake (3).

8. The disc brake device according to anyone of the preceding claims from 1 to 6, wherein the intermediate curved part (11, 11') of said elastic portion of the elastic means (10, 10') faces the inside of the disc brake (3).

9. The disc brake device according to anyone of the preceding claims, wherein the slots (7a) are open on the side corresponding to the axle of the disc brake (3).

10. The disc brake device according to any of the preceding claims, **characterized in that** it is housed in a camber angle (2) of a wheel (A,B).

11. The disc brake device according to any of the preceding claims, wherein the calliper body (4) is located astride of the disc brake (3) and is fixed to a fork (18) of the motor-vehicle and comprises, on its internal side located in the camber angle (2) of the wheel (A, B), the fixed brake pad (6) and, on its external opposite side, a cylinder-piston system having the mobile brake pad (5) located near the free end of piston (20).

12. A strip-like elastic means for the mobile coupling of a disc brake according to claim 1 **characterized in that** said elastic means comprises:
- a strip-like elastic portion substantially U- or C-shaped, formed by a flat arm (12, 12'), an opposite arched arm (13, 13') and an intermediate curved part (11), and
- a fixing portion (14), flange-shaped, located laterally and along a plane orthogonal with respect to that of the flat arm (12, 12'), with which it forms an integral part; said fixing portion being provided with a fastening means (15) apt to receive screws or other fasteners (19) and a lateral portion (16) protruding with respect to said flat arm (12, 12').

13. The strip-like elastic means according to claim 12, wherein said elastic portion is substantially U-shaped and formed by a flat arm (12), an opposite arched profile arm (13) and an intermediate curved part (11), and the flange-shaped fixing portion (14) is connected to and forms an integral part with said flat arm (12) and protrudes towards the arm (13) having an arched profile.

14. The strip-like elastic means according to claim 12, wherein said elastic portion is substantially C-shaped and formed by a flat end (12'), an opposite arched end (13') and an intermediate curved part (11'), and said flange-shaped fixing portion (14') protrudes towards the curved intermediate part (11') and is connected to said flat arm (12') through a connecting length (17).

15. The strip-like elastic means according to any of the preceding claims from 12 to 14, wherein the curved intermediate part (11, 11') of the elastic portion is provided with a longitudinal slot (21, 21').

16. The strip-like elastic means according to any of the preceding claims from 12 to 15 for use in the mobile coupling of bosses into radial slots.

## Patentansprüche

1. Scheibenbremseinrichtung, insbesondere geeignet für Motorfahrzeuge, umfassend:
- eine Radnabe (8);
- eine Scheibenbremse (3), die mit einem Bremsring (3a) mit gegenüberliegenden Bremsoberflächen versehen ist, welche koaxial an der Radnabe (8) mittels einer beweglichen Kopplung angeschlossen ist, und axial entlang der Radnabe (8) gleitet, und
- zwei Bremsbeläge (5, 6), die gegenüberliegend und entsprechend den Bremsoberflächen angeordnet sind, und durch eine Bremszange (4) gegen die Oberflächen aktiviert wird, wobei einer (6) der Bremsbeläge fixiert und der andere Bremsbelag (5) beweglich ist und durch die feste Bremszange (4) aktiviert wird,
wobei die Scheibenbremse (3) mit äquidistanten radialen Schlitzen (7, 7a) versehen ist, welche alle eine Mitnahmeoberfläche (7') und eine Seitenoberfläche gegenüber der Mitnahmeoberfläche (7') aufweisen, und wobei die Radnabe (8) mit entsprechenden radialen Vorsprüngen (9) versehen ist, deren Größe kleiner als die der Schlitze (7, 7a) ist, wobei jeder Vorsprung mit einer flachen Oberfläche versehen ist, und die bewegliche Kopplung der Scheibenbremse (3) an der Radnabe (8) durch das Einsetzen der Vorsprünge (9) in die entsprechenden radialen Schlitze (7, 7a) mit der Zwischenlage eines streifenartigen elastischen Mittels (10, 10') erhalten wird, **dadurch gekennzeichnet, dass** das streifenartige elastische Mittel umfasst:
- einen streifenartigen elastischen Abschnitt, der durch einen flachen Arm (12, 12') ausgebildet wird, welcher zwischen der flachen Oberfläche des Radnaben-Vorsprungs (9) und der Mitnahmeoberfläche (7') der radialen Schlitze (7, 7a) liegt, wobei ein gegenüberliegender gebogener Profilarm (13, 13') in die Seitenoberfläche des Scheibenschlitzes (7, 7a) gegenüber der Mitnahmeoberfläche (7') eingreift, und einen zwischenliegenden gekrümmten Teil (11, 11'), und
- einen Fixierungsabschnitt (14, 14'), der flanschförmig ist, seitlich und entlang einer Ebene orthogonal bezüglich der des flachen Arms (12, 12') angeordnet ist, mit welchem er einen integralen Teil bildet; wobei der zweite Fixierungsabschnitt mit einem Befestigungsmittel (15, 15') versehen ist, das zur Aufnahme von Schrauben (19) oder anderen Befestigern geeignet ist, und mit zumindest einem seitlichen Abschnitt, der bezüglich des flachen Arms oder Endes (12, 12') herausragt.

2. Scheibenbremseinrichtung gemäß Anspruch 1, wobei der streifenartige elastische Abschnitt im Wesentlichen U-förmig ist und durch einen flachen Arm (12), einen gegenüberliegenden, bogenförmigen Profilarm (13) und einem zwischenliegenden gekrümmten Teil (11) gebildet wird, und wobei der flanschförmige Fixierungsabschnitt (14) an den flachen Arm (12) angeschlossen ist und mit diesem einen integralen Teil bildet, und zu dem Arm (13) mit einem bogenförmigen Profil ragt.

3. Scheibenbremseinrichtung gemäß Anspruch 1, wobei der streifenartige elastische Abschnitt (10') im Wesentlichen C-förmig ist und durch ein flaches Ende (12'), ein gegenüberliegendes bogenförmiges Ende (13') und einen zwischenliegenden gekrümmten Teil (11') gebildet wird, und der flanschförmige Fixierungsabschnitt (14') zu dem gekrümmten zwischenliegenden Teil (11') ragt und an das flache Ende (12') über eine Verbindungslänge (17) angeschlossen ist.

4. Scheibenbremseinrichtung gemäß irgendeinem der vorhergehenden Ansprüche, wobei der zwischenliegende gekrümmte Teil (11, 11') des elastischen Abschnitts (10') mit einem Längsschlitz (21, 21') versehen ist.

5. Scheibenbremseinrichtung gemäß irgendeinem der vorhergehenden Ansprüche, wobei das elastische Mittel (10, 10') zwischen dem Vorsprung (9) und dem entsprechenden Schlitz (7, 7a) in solch einer Weise eingesetzt ist, dass deren Arme (12, 12', 13, 13') in Druckkontakt mit dem gegenüberliegenden seitlichen Oberflächen von jedem radialen Schlitz (7, 7a) steht und an dem entsprechenden Vorsprung (9) durch eine Schraube (19) oder andere Befestiger befestigt sind.

6. Scheibenbremseinrichtung gemäß irgendeinem der vorhergehenden Ansprüche, wobei der flache Arm (12, 12') der elastischen Mittel (10) in Berührung mit der Mitnahmeoberfläche (7') von jedem radialen Schlitz (7, 7a) während des aktiven Bremsschritts ist.

7. Scheibenbremseinrichtung gemäß irgendeinem der vorhergehenden Ansprüche, wobei der zwischenliegende gekrümmte Teil (11, 11') des elastischen Abschnitts des elastischen Mittels (10, 10') auf das Äußere der Scheibenbremse (3) weist.

8. Scheibenbremseinrichtung gemäß irgendeinem der vorhergehenden Ansprüche 1 bis 6, wobei der zwischenliegende gekrümmte Teil (11, 11') des elastischen Abschnitts des elastischen Mittels (10, 10') auf das Innere der Scheibenbremse (3) weist.

9. Scheibenbremseinrichtung gemäß irgendeinem der vorhergehenden Ansprüche, wobei die Schlitze (7a) auf der Seite entsprechend der Achse der Scheibenbremse (3) offen sind.

10. Scheibenbremseinrichtung gemäß irgendeinem der vorhergehenden Ansprüche, **dadurch gekennzeichnet, dass** sie in einem Sturzwinkel (2) eines Rades (A, B) aufgenommen ist.

11. Scheibenbremseinrichtung gemäß irgendeinem der vorhergehenden Ansprüche, wobei der Bremszangenkörper (4) rittlings der Scheibenbremse (3) angeordnet ist und an einer Gabel (18) des Motorfahrzeugs fixiert ist und auf seiner inneren Seite, die in dem Sturzwinkel (2) des Rades (A, B) angeordnet ist, den festen Bremsbelag (6) und auf seiner äußeren gegenüberliegenden Seite ein Zylinder-Kolben-System mit dem beweglichen Bremsbelag (5), der nahe des freien Endes eines Kolbens (20) angeordnet ist, umfasst.

12. Streifenartiges elastisches Mittel für die bewegliche Kopplung einer Scheibenbremse gemäß Anspruch 1, **dadurch gekennzeichnet, dass** das elastische Mittel umfasst:
- einen streifenartigen elastischen Abschnitt, der im Wesentlichen U- oder C-förmig ist, durch einen flachen Arm (12, 12'), einen gegenüberliegenden bogenförmigen Arm (13, 13') und einen zwischenliegenden gekrümmten Teil (11) gebildet ist, und
- einen Fixierungsabschnitt (14), der flanschförmig ist, seitlich und entlang einer Ebene angeordnet ist, die orthogonal bezüglich der des flachen Arms (12, 12') ist, mit welchem er einen integralen Teil bildet; wobei der Fixierungsabschnitt mit einem Befestigungsmittel (15) versehen ist, der zur Aufnahme von Schrauben oder anderen Befestigern (19) geeignet ist, und mit einem seitlichen Abschnitt (16), der bezüglich des flachen Arms (12, 12') hervorsteht.

13. Streifenartiges elastisches Mittel gemäß Anspruch 12, wobei der elastische Abschnitt im Wesentlichen U-förmig ist und durch einen flachen Arm (12), einen gegenüberliegenden bogenförmigen Profilarm (13) und einen zwischenliegenden gekrümmten Teil (11) gebildet ist, und wobei der flanschförmige Fixierungsabschnitt (14) an dem flachen Arm (12) angeschlossen ist und einen integralen Teil desselben bildet und zu dem Arm (13) hervorsteht, welcher ein gebogenes Profil aufweist.

14. Streifenartiges elastisches Mittel gemäß Anspruch 12, wobei der elastische Abschnitt im Wesentlichen C-förmig ist und durch ein flaches Ende (12'), ein gegenüberliegendes gebogenes Ende (13') und einen zwischenliegenden gekrümmten Teil (11') gebildet wird, und wobei der flanschförmige Fixierungsabschnitt (14) zu dem gekrümmten zwischenliegenden Teil (11') hervorsteht und an dem flachen Arm (12') über eine Verbindungslänge (17) verbunden ist.

15. Streifenartiges elastisches Mittel gemäß irgendeinem der vorhergehenden Ansprüche von 12 bis 14, wobei der gekrümmte zwischenliegende Abschnitt (11, 11') des elastischen Abschnitts mit einem Längsschlitz (21, 21') versehen ist.

16. Streifenartiges elastisches Mittel gemäß irgendeinem der vorhergehenden Ansprüche von 12 bis 15 zur Verwendung in der beweglichen Kopplung von Vorsprüngen in radialen Schlitzen.

## Revendications

1. Dispositif de frein à disque particulièrement utilisable pour des véhicules à moteur, comprenant:
- un moyeu (8) de roue;
- un frein (3) à disque qui comporte une piste de frottement (3a) à surfaces de freinage opposées, est connecté coaxialement audit moyeu (8) de roue au moyen d'un accouplement mobile, et coulisse axialement le long dudit moyeu (8) de roue.
et
- deux plaquettes (5, 6) de frein, opposées et situées en correspondance avec lesdites surfaces de freinage, et activées par un étrier (4) contre lesdites surfaces, une première (6) desdites plaquettes de frein étant fixe et l'autre plaquette (5) de frein étant mobile et activée par ledit étrier fixe (4),
dans lequel le frein (3) à disque comporte des fentes radiales (7, 7a) présentant chacune une surface d'entraînement (7') et une surface latérale opposée à ladite surface d'entraînement (7'), et le moyeu (8) de roue comporte des bossages radiaux correspondants (9) de dimensions inférieures à celles des fentes (7, 7a), chaque bossage comportant une surface plate, et l'accouplement mobile du frein (3) à disque avec le moyeu (8) de roue étant atteint par l'insertion desdits bossages (9) dans les fentes correspondantes (7, 7a) avec interposition d'un moyen élastique (10, 10') du type à bande, **caractérisé en ce que** le moyen élastique du type à bande comprend:
- une partie élastique du type à bande formée par un bras plat (12, 12') interposé entre la surface plate du bossage (9) du moyeu de roue et la surface d'entraînement (7') des fentes radiales (7, 7a), une partie opposée à profil en arc (13, 13') venant en prise avec la surface latérale de la fente (7, 7a) du disque opposée à la surface d'entraînement (7'), et une partie incurvée intermédiaire (11, 11'), et
- une partie de fixation (14, 14') en forme de bride, située latéralement et dans un plan orthogonal à celui du bras plat (12, 12') avec lequel elle est d'un seul tenant; ladite deuxième partie de fixation comportant un moyen d'attache (15, 15') apte à recevoir des vis (19) ou d'autres dispositifs d'attache, et comportant au moins une partie latérale en saillie par rapport au bras ou extrémité plat (12, 12').

2. Dispositif de frein à disque selon la revendication 1, dans lequel ladite partie élastique du type à bande est sensiblement en U et formée par un bras plat (12), un bras opposé (13) à profil en arc et une partie incurvée intermédiaire (11), et ladite partie de fixation (14) en forme de bride est connectée audit bras plat (12) et d'un seul tenant avec lui, et fait saillie vers le bras (13) à profil en arc.

3. Dispositif de frein à disque selon la revendication 1, dans lequel ladite partie élastique (10') du type à bande est sensiblement en C et est formée par une extrémité plate (12'), une extrémité opposée (13') en arc et une partie incurvée intermédiaire (11'), et la partie de fixation (14') en forme de bride fait saillie vers la partie incurvée intermédiaire (11') et est connectée à ladite extrémité plate (12') au moyen d'une longueur de connexion (17).

4. Dispositif de frein à disque selon l'une quelconque des revendications précédentes, dans lequel une fente longitudinale (21, 21') est ménagée dans la partie incurvée intermédiaire (11, 11') de ladite partie élastique (10').

5. Dispositif de frein à disque selon l'une quelconque des revendications précédentes, dans lequel le moyen élastique (10, 10') est inséré entre le bossage (9) et la fente correspondante (7, 7a) d'une manière telle que ses bras (12, 12', 13, 13') sont en contact de pression avec la surface latérale opposée de chaque fente radiale (7, 7a) et sont attachés au bossage correspondant (9) par une vis (19) ou d'autres moyens d'attache.

6. Dispositif de frein à disque selon l'une quelconque des revendications précédentes, dans lequel ledit bras plat (12, 12') dudit moyen élastique (10) est en contact avec la surface d'entraînement (7') de chaque fente radiale (7, 7a) pendant l'étape de freinage actif.

7. Dispositif de frein à disque selon l'une quelconque des revendications précédentes, dans lequel la partie incurvée intermédiaire (11, 11') de ladite partie élastique du moyen élastique (10, 10') est tournée vers l'extérieur du frein (3) à disque.

8. Dispositif de frein à disque selon l'une quelconque des revendications 1 à 6, dans lequel la partie incurvée intermédiaire (11, 11') de ladite partie élastique du moyen élastique (10, 10') est tournée vers l'intérieur du frein (3) à disque.

9. Dispositif de frein à disque selon l'une quelconque des revendications précédentes, dans lequel les fentes (7a) sont ouvertes sur le côté correspondant à l'axe du frein (3) à disque.

10. Dispositif de frein à disque selon l'une quelconque des revendications précédentes, **caractérisé en ce qu'**il est logé dans un angle bombé (2) d'une roue (A, B).

11. Dispositif de frein à disque selon l'une quelconque des revendications précédentes, dans lequel le corps (4) d'étrier est situé à califourchon sur le frein (3) à disque et est fixé à une fourche (18) d'un véhicule à moteur et comprend, sur son côté interne situé à l'intérieur de l'angle de bombement (2) de la roue (A, B), la plaquette fixe (6) de frein et, sur son côté externe opposé, un système à cylindre et piston monté d'une manière telle que la plaquette mobile (5) de frein est située près de l'extrémité libre du piston (20).

12. Moyen élastique du type à bande apte à accoupler de façon mobile un frein à disque selon la revendication 1, **caractérisée en ce que** ledit moyen élastique comprend:
une partie élastique du type à bande sensiblement en U ou en C, formée d'un bras plat (12, 12'), d'un bras opposé à profil en arc ( 13, 13'), et d'une partie incurvée intermédiaire (11), et
une partie de fixation (14) en forme de bride, située latéralement et le long d'un plan orthogonal à celui du bras plat (12, 12') avec lequel elle est d'un seul tenant; ladite partie de fixation comportant un moyen d'attache (15), apte à recevoir des vis ou d'autres dispositifs d'attache (19), et une partie latérale (16) en saillie par rapport audit bras plat (12, 12').

13. Moyen élastique du type à bande selon la revendication 12, dans lequel ladite partie élastique est sensiblement en U et formée par un bras plat (12), un bras opposé (13) à profil en arc et une partie incurvée intermédiaire (11), et la partie de fixation (14) en forme de bride est connectée audit bras plat (12) et d'un seul tenant avec lui, et fait saillie vers le bras (13) à profil en arc.

14. Moyen élastique du type à bande selon la revendication 12, dans lequel ladite partie élastique est sensiblement en C et est formée par une extrémité plate (12'), une extrémité opposée (13') en forme d'arc et une partie incurvée intermédiaire (11'), et ladite partie de fixation (14') en forme de bride fait saillie vers la partie incurvée intermédiaire (11') et est connectée audit bras plat (12') au moyen d'une longueur de connexion (17).

15. Moyen élastique du type à bande selon l'une quelconque des revendications 12 à 14, dans lequel une fente longitudinale (21, 21') est ménagée dans la partie incurvée intermédiaire (11, 11') de la partie élastique.

16. Moyen élastique du type à bande selon l'une quelconque des revendications 12 à 15, à utiliser pour l'accouplement mobile de bossages dans des fentes radiales.
